# EUROPÄISCHE PATENTSCHRIFT

(11) **EP 4 229 379 B1**
(45) Veröffentlichungstag und Bekanntmachung des Hinweises auf die Patenterteilung: **20.08.2025**
(21) Anmeldenummer: 20790296.6
(22) Anmeldetag: 13.10.2020
(51) Int. Cl.: G01L 9/00, G01L 19/04, G01L 19/14

(54) **DRUCKMESSZELLE UND VERFAHREN ZUR HERSTELLUNG EINER DRUCKMESSZELLE**
PRESSURE-MEASURING CELL AND METHOD FOR PRODUCING A PRESSURE-MEASURING CELL
CELLULE DE MESURE DE PRESSION ET PROCÉDÉ DE FABRICATION D'UNE CELLULE DE MESURE DE PRESSION

(43) Veröffentlichungstag der Anmeldung: 23.08.2023
(73) Patentinhaber: VEGA Grieshaber KG, 77709 Wolfach (DE)
(72) Erfinder: HUBER, Jochen, 77709 Wolfach (DE); KOPP, Valentin, 77709 Wolfach (DE)
(74) Vertreter: Patentanwälte Bauer Vorberg Kayser
(86) Internationale Anmeldenummer: PCT/EP2020/078780
(87) Internationale Veröffentlichungsnummer: WO 2022/078578

(56) Entgegenhaltungen:
- US-A1- 2002 029 639
- US-A1- 2011 073 969

## Beschreibung

Die Erfindung betrifft eine Druckmesszelle gemäß dem Oberbegriff des Anspruchs 1. Die Erfindung betrifft ferner ein Verfahren zur Herstellung einer Druckmesszelle gemäß Anspruch 7.

Aus dem Stand der Technik sind verschiedene Formen von Druckmesszellen bekannt. Druckmesszellen werden in Druckmessgeräten eingesetzt und überführen einen Druck in ein elektrisches Signal, das dann weiterverarbeitet werden kann. Druckmesszellen werden nach dem zugrundeliegenden Messprinzip, den zum Prozess hin orientierten Materialien sowie danach unterschieden, ob absolute oder relative Drücke gemessen werden können.

Ein bekannter Typ einer Druckmesszelle umfasst dabei eine drucksensitive Membran, welche sich in Abhängigkeit des Druckes wölbt. Das Maß der Wölbung kann dann mittels geeigneter, insbesondere integrierter Sensorik in ein elektrisches Signal umgewandelt werden. Die Membran kann aus einem Halbleitermaterial hergestellt sein, insbesondere aus Silizium. Diese Membran ist üblicherweise mit ihrem Randbereich umlaufend an einem Träger befestigt. Als Material für den Träger kommt insbesondere Glas in Frage, unter anderem Borosilikatglas.

Zudem ist es bekannt, die Einheit aus Membran und Träger auf einem Substrat anzuordnen. Dieses Substrat bildet üblicherweise den Abschluss einer mit einem Gehäuse umgebenen und mit einem inkompressiblen Medium gefüllten Messkammer. Das Gehäuse weist eine äußere Membran auf, so dass ein auf das Gehäuse wirkender Druck über das Medium in der Messkammer auf die innere Membran übertragen wird. Bei aus dem Stand der Technik bekannten Druckmesszellen wird für das Substrat in der Regel Keramik oder Metall als Werkstoff eingesetzt.

Aus US 2002/0029639 A1 ist eine Druckmesszelle bekannt, mit einem Grundkörper und einer Silizium-Membran.

Aus US 2011/0073969 A1 ist eine Sensoranordnung bekannt, mit einem Sensorelement aus Silizium und einem Träger.

Insgesamt werden für den Aufbau von aus dem Stand der Technik bekannten Druckmesszellen eine Vielzahl von Komponenten mit unterschiedlichen Materialien verwendet, welche jeweils unterschiedliche thermische Ausdehnungskoeffizienten haben. Gerade bei Druckmesszellen, die in ihrem Einbauort großen und teilweise in kurzer Zeit auftretenden Temperaturschwankungen ausgesetzt sind, kann dies zu intrinsischen Spannungen führen. Diese intrinsischen Spannungen können im Folgenden parasitäre Drucksignale hervorrufen und damit das Messergebnis beeinflussen.

Die zugrundeliegende Aufgabe der Erfindung ist es daher, eine Druckmesszelle und ein Verfahren zur Herstellung einer Druckmesszelle zur Verfügung zu stellen, so dass die Druckmesszelle für den Einsatz in Umgebungen mit großen Temperaturschwankungen geeignet ist.

Die Lösung der Aufgabe erfolgt erfindungsgemäß mit den Merkmalen der unabhängigen Ansprüche. Weitere praktische Ausführungsformen und Vorteile sind in Verbindung mit den abhängigen Ansprüchen beschrieben.

Eine erfindungsgemäße Druckmesszelle weist dabei einen Träger aus Glas, insbesondere aus Borosilikatglas und eine darauf angeordnete drucksensitive Membran auf. Bei der Membran handelt es sich insbesondere um eine Siliziummembran. Die Membran ist insbesondere mit ihrem Randbereich umlaufend auf dem Träger angeordnet und vorzugsweise mittels anodischem Bonden an dem Träger fixiert.

Die Einheit aus Träger und Membran ist auf einem Glassubstrat angeordnet. Der Träger ist insbesondere mit der von der Membran abgewandten Seite auf das Glassubstrat geklebt. Durch die Verwendung zweier Glaswerkstoffe (Träger und Glassubstrat) mit identischen oder zumindest sehr ähnlichen thermischen Ausdehnungskoeffizienten werden durch Temperaturschwankungen induzierte intrinsische Spannungen in der Druckmesszelle auf ein Minimum reduziert und möglichst vermieden. Der Druckmesszelle kann so über einen weiten Temperaturbereich hinweg eingesetzt werden, ohne dass parasitäre Drucksignale auftreten.

Eine besonders einfache Herstellung der Druckmesszelle wird zudem dadurch ermöglicht, dass die Verbindung zwischen Träger und Glassubstrat mittels Kleben erfolgt.

Es handelt es sich bei der Druckmesszelle um eine Druckmesszelle mit der Möglichkeit zur Messung eines Relativdruckes, d.h. auch die dem Prozess abgewandte Rückseite der Membran kann mit einem Druck beaufschlagt werden. Dazu weist der Träger eine erste Durchgangsöffnung auf und das Glassubstrat weist eine zweite Durchgangsöffnung auf, wobei die erste Durchgangsöffnung und die zweite Durchgangsöffnung fluchtend zueinander angeordnet sind. Es besteht zwischen den beiden Durchgangsöffnungen eine durchgehende fluidale Verbindung zur Bildung einer Druckausgleichsleitung. Die erste Durchgangsöffnung erstreckt sich über die gesamte Dicke des Trägers und die zweite Durchgangsöffnung über die gesamte Dicke des Glassubstrats, so dass eine fluidale Verbindung bzw. ein Kanal zwischen einem Reservoir mit einem Referenzdruck und dem Bereich unterhalb der Membran herstellbar ist.

Um eine möglichst genaue Justage bzw. Positionierung des Trägers und des Glassubstrates und damit der beiden Durchgangsöffnungen zueinander zu ermöglichen, weist das Glassubstrat ein die zweite Durchgangsöffnung umschließenden Vorsprung bzw. Überstand auf, der gegenüber der zum Träger weisenden Oberseite des Glassubstrates hervorragt. Dieser Vorsprung bzw. Überstand erstreckt sich von dem Glassubstrat aus in die erste Durchgangsöffnung. Die Verbindung des Trägers mit dem Glassubstrat erfolgt dann durch Einstecken des Vorsprungs in die zweite Durchgangsöffnung. Entsprechend kann in einfacher Weise bei der Klebung des Trägers auf das Glassubstrat eine fluchtende Anordnung der beiden Durchgangsöffnungen erzielt werden, indem der Träger so auf das Glassubstrat aufgesetzt wird, dass der Vorsprung in der ersten Durchgangsöffnung aufgenommen ist. Der Vorsprung dient mit anderen Worten als Positionierhilfe und kann zudem zur Strukturierung der Klebeschicht dienen.

Der Vorsprung ist von einem in dem Glassubstrat angeordneten Rohr gebildet, dessen zum Träger weisendes Ende gegenüber dem Glassubstrat hervorragt. Das Rohr ist ebenfalls aus Glas und weist einen identischen oder zumindest ähnlichen thermischen Ausdehnungskoeffizienten auf wie der Träger und das Substrat.

Insbesondere ist der Außendurchmesser des Vorsprungs derart an den Innendurchmesser der ersten Durchgangsöffnung angepasst, dass der Vorsprung mit seiner Außenfläche vollflächig an der Innenseite der ersten Durchgangsöffnung anliegt. Damit wird eine relative Verschiebung des Trägers und des Glassubstrates senkrecht zu einer Verbindungsrichtung vermieden. Weisen der Vorsprung und korrespondierend dazu die erste Durchgangsöffnung in dem Träger eine kreisförmige Innen- bzw. Außenfläche auf, so kann der Träger nach dem Einstecken des Vorsprungs noch relativ zu dem Substrat verdreht werden.

Insbesondere erstreckt sich das Rohr mindestens über die gesamte Dicke des Glassubstrates und vorzugsweise ragt das Rohr auch gegenüber der Unterseite des Glassubstrates hervor und kann hier als Anschluss für eine Leitung oder einen Schlauch dienen. Das Rohr ist insbesondere als dünnes Röhrchen ausgebildet und bildet eine Kapillare. Das Rohr dient dann gleichzeitig zur Bildung der zweiten Durchgangsöffnung.

Wenn das Rohr sowohl zur Bildung der zweiten Durchgangsöffnung und des Vorsprungs dient, kann die Druckmesszelle mit nur wenigen Bauteilen und Verfahrensschritten hergestellt werden.

In einer weiteren praktischen Ausführungsform der erfindungsgemäßen Druckmesszelle ist das Rohr in das Glassubstrat eingeglast und damit fest mit dem Glassubstrat verbunden. Damit ergeben sich Vorteile bei der Herstellung, nämlich zum einen, dass das Rohr direkt bei der Herstellung des Glassubstrates mit eingeglast werden kann, somit die Bildung und Begrenzung der Durchgangsöffnung und ggf. auch die Herstellung des Vorsprungs in nur einem Herstellungsschritt mit dem Glassubstrat erfolgt.

In einer weiteren praktischen Ausführungsform sind mehrere elektrische Kontakte direkt in das Glassubstrat eingeglast. Besonders vorteilhaft im Hinblick auf die Anzahl der Herstellungsschritte ist es, wenn sowohl die elektrischen Kontakte als auch das eingeglaste Rohr gleichzeitig in das Glassubstrat eingeglast werden.

Wenn mittels des Rohres gleichzeitig die Durchgangsöffnung und der Vorsprung gebildet werden, so ist der Außendurchmesser des Rohres insbesondere so groß, dass er an die Innenfläche der ersten Durchgangsöffnung angepasst ist. Durch die Wandstärke des Rohres ergibt sich folglich, dass der Innendurchmesser der durch das Rohr gebildeten zweiten Durchgangsöffnung kleiner ist als der Innendurchmesser der ersten Durchgangsöffnung.

Alternativ kann das Rohr auch lösbar in das Glassubstrat eingeschoben sein und vor allem nur für den Zeitraum der Justage und Verbindung des Trägers und Glassubstrates in dem Glassubstrat verbleiben. Wenn die Verbindung des Trägers und des Substrates abgeschlossen ist, kann das Rohr wieder aus dem zusammengebauten Druckmesszelle entfernt werden. In diesem Fall können dann die erste Durchgangsöffnung und die zweite Durchgangsöffnung denselben Innendurchmesser aufweisen und die beiden Durchgangsöffnungen stufenlos ineinander übergehen.

Die Erfindung betrifft auch ein Verfahren zur Herstellung einer Druckmesszelle, insbesondere einer wie vorstehend beschriebenen Druckmesszelle. Erfindungsgemäß wird dazu eine drucksensitive Membran auf einem Träger aus Glas fixiert. Insbesondere handelt es sich bei der Membran um eine Siliziummembran. Die Membran wird insbesondere in ihrem Randbereich umlaufend mittels anodischem Bonden auf dem Träger fixiert. Anschließend wird die Einheit aus Membran und Träger auf einem Glassubstrat angeordnet und insbesondere geklebt.

In Bezug auf die Vorteile wird auf die vorstehende Beschreibung in Zusammenhang mit der Druckmesszelle verwiesen.

Bei der Druckmesszelle, die auch als Druckmesszelle zur Messung eines Relativdruckes vorgesehen ist, weist der Träger eine erste Durchgangsöffnung auf und das Glassubstrat weist eine zweite Durchgangsöffnung auf. Die Herstellung der Druckmesszelle kann weiter vereinfacht und insbesondere möglichst automatisiert werden, da das Glassubstrat einen Vorsprung mit der zweiten Durchgangsöffnung aufweist und der Träger und das Glassubstrat derart zueinander justiert werden, dass der Vorsprung in die erste Durchgangsöffnung hineinragend angeordnet wird. Dazu werden Träger und das Glassubstrat in einer Verbindungsrichtung aufeinander zubewegt und so zueinander ausgerichtet, dass der Vorsprung in die erste Durchgangöffnung gesteckt werden kann.

Zur Bildung des Vorsprungs wird zunächst ein Rohr in das Glassubstrat eingeglast und anschließend erfolgt die Einführung in die erste Durchgangsöffnung des Trägers. Vorzugsweise werden somit direkt bei der Herstellung des Glassubstrates die erste Durchgangsöffnung und der Vorsprung durch das Rohr ausgebildet.

Weitere praktische Ausführungsformen sind in Zusammenhang mit den Figuren erläutert. Es zeigen:
- Fig. 1: einen Ausschnitt einer erfindungsgemäßen Druckmesszelle in einer schematischen Ansicht im Querschnitt und
- Fig. 2: die Druckmesszelle aus Fig. 1 mit elektrischen Kontakten, Verdrängungskörper und Außenring.

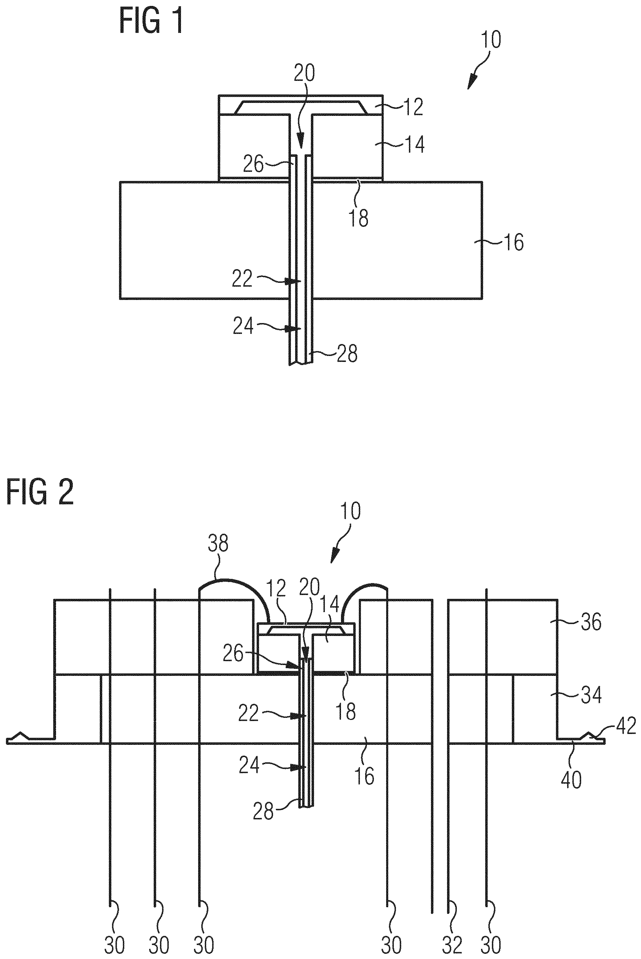

In Fig. 1 ist ein Ausschnitt einer Druckmesszelle 10 dargestellt. Die Druckmesszelle 10 umfasst dabei eine drucksensitive Membran 12 aus Silizium, welche umlaufend auf einen Träger 14 aus Glas - hier Borosilikatglas - gebondet ist.

Der Träger 14 aus Glas wiederrum ist mit seiner Unterseite, das heißt mit der der Membran 12 gegenüberliegenden Seite auf einem Glassubstrat 16 angeordnet. Das Glassubstrat 16 ist in Fig. 1 nur ausschnittsweise dargestellt. Ein größerer Ausschnitt ist in Fig. 2 dargestellt und wird weiter unten noch im Detail erläutert. Der Träger 14 ist mittels einer Klebeschicht 18 auf das Glassubstrat 16 geklebt.

In dem Träger 14 ist eine erste Durchgangsöffnung 20 ausgebildet, welche sich von der Unterseite des Trägers 14 bis zur Oberseite des Trägers 14, auf welcher die Membran 12 angeordnet ist, erstreckt. In dem Glassubstrat 16 ist eine zweite Durchgangsöffnung 22 ausgebildet. Diese zweite Durchgangsöffnung 22 erstreckt sich über die gesamte Dicke des Glassubstrates 16, d.h. von der Unterseite des Glassubstrates 16 bis zur Oberseite des Glassubstrates 16.

Wie in Fig. 1 gut erkennbar ist, sind die erste Durchgangsöffnung 20 und die zweite Durchgangsöffnung 22 fluchtend zueinander angeordnet, sodass sich eine durchgehende Druckausgleichsleitung 24 ergibt.

Bei der gezeigten Druckmesszelle 10 handelt es sich um eine Druckmesszelle 10 zur Bestimmung eines Relativdruckes zwischen einem Bereich oberhalb der Membran 12 und einem Bereich unterhalb der Membran 12. Der Bereich unterhalb der Membran 12 kann über die von den beiden Durchgangsöffnungen 20, 22 gebildeten Druckausgleichsleitung 24 mit einem gewünschten Druck beaufschlagt werden.

Um die Klebeschicht 18 zu strukturieren und die Einheit aus Träger 14 und Membran 12 auf dem Glassubstrat 16 so anzuordnen, dass die beiden Durchgangsöffnungen 20, 22 übereinander angeordnet sind und eine fluidale Verbindung geschaffen ist, weist die Oberseite des Glassubstrates 16 einen Vorsprung bzw. Überstand 26 auf.

Der Vorsprung 26 ist in der hier gezeigten Ausführungsform durch ein in dem Glassubstrat 16 angeordnetes Rohr 28 aus Glas gebildet, dessen trägerseitiges Ende gegenüber der Oberseite des Glassubstrates 16 hervorragt. Das Rohr 28 erstreckt sich durch die gesamte Dicke des Glassubstrates 16 und ragt auch nach unten gegenüber der Unterseite des Glassubstrates 16 hervor. An dem unteren Ende kann beispielsweise ein Schlauch zur Beaufschlagung mit Druck befestigt werden. Das Rohr 28 bildet bzw. begrenzt die zweite Durchgangsöffnung 22.

Durch die Verwendung eines Rohres 28 aus Glas, eines Glassubstrates 16 und eines Trägers 14 aus Glas, weist die Druckmesszelle 10 überwiegend Komponenten mit ähnlichen thermischen Ausdehnungskoeffizienten auf, so dass temperaturinduzierte Spannungen in der Druckmesszelle 10 weitestgehend reduziert sind.

Die Herstellung der Druckmesszelle 10 erfolgt indem zunächst das Rohr 28 aus Glas in das Glassubstrat 16 eingeglast wird. Anschließend werden die Einheit aus Träger 14 und Membran 12 mit dem Glassubstrat 16 verbunden, wobei der Vorsprung 26 dazu (als Positionierhilfe und zur relativen Ausrichtung des Trägers 14 und Glassubstrates 16) in die erste Durchgangsöffnung 20 hineinragend angeordnet wird. Die Außenumfangsfläche des Vorsprungs 26 bzw. hier des Rohres 28 ist dabei so an die Innenumfangsfläche der ersten Durchgangsöffnung 20 angepasst, dass der Vorsprung 26 genau passend in der ersten Durchgangsöffnung 20 aufgenommen wird.

Das Rohr 28 und auch die erste und zweite Durchgangsöffnung 20, 22 sind in einer Draufsicht kreisförmig ausgebildet, so dass bei Einführung des Vorsprungs 26 in die erste Durchgangsöffnung 20 lediglich noch eine Drehung des Trägers 14 relativ zu dem Glassubstrat 16 möglich ist.

In Fig. 2 ist ein größerer Ausschnitt der Druckmesszelle 10 mit weiteren Komponenten abgebildet.

Wie gut erkennbar ist, sind neben dem Rohr 28 noch fünf elektrische Kontakte 30 in das Glassubstrat 16 eingeglast. Ferner sind auch ein Befüllröhrchen 32, sowie ein Außenring 34 und ein Verdrängungskörper 36 in das Glassubstrat 16 eingeglast bzw. an das Glassubstrat 16 angeglast. Die Herstellung des Glassubstrates 16 mit den vorgenannten Komponenten erfolgt dabei in einem Verfahrensschritt, wobei bei der Herstellung des Glassubstrates 16 der Außenring 34, der Verdrängungskörper 36, das Befüllröhrchen 32 und die elektrischen Kontakte 30 und das Rohr 28 eingeglast werden.

Die elektrischen Kontakte 30 sind über Bonddrähte 38 mit der Membran 12 bzw. auf der Membran 12 angeordneter Sensorik (nicht dargestellt) verbunden.

Der Außenring 34 weist einen umlaufenden Kragen 40 mit einem Schweißbuckel 42 auf und dient zur Anbindung eines Gehäuses (nicht dargestellt), welches das Glassubstrat 16 mit der Einheit aus Membran 12 und Träger 14 sowie dem Verdrängungskörper 36 von oben umschließt.

Die von dem Gehäuse und dem Glassubstrat 16 gebildete Messkammer kann dann über das Befüllröhrchen 32 mit Flüssigkeit befüllt werden. Der Verdrängungskörper 36 dient dazu, dass Volumen in der Messkammer zu reduzieren.

### Bezugszeichenliste

- 10: Druckmesszelle
- 12: Membran
- 14: Träger
- 16: Glassubstrat
- 18: Klebeschicht
- 20: erste Durchgangsöffnung
- 22: zweite Durchgangsöffnung
- 24: Druckausgleichsleitung
- 26: Vorsprung, Überstand
- 28: Rohr
- 30: elektrischer Kontakt
- 32: Befüllröhrchen
- 34: Außenring
- 36: Verdrängungskörper
- 38: Bonddraht
- 40: Kragen
- 42: Schweißbuckel

## Patentansprüche

1. Druckmesszelle umfassend einen Träger (14) aus Glas und eine darauf angeordnete drucksensitive Membran (12),
wobei der Träger (14) auf einem Glassubstrat (16) angeordnet ist,
wobei
der Träger (14) eine erste Durchgangsöffnung (20) aufweist und das Glassubstrat (16) eine zweite Durchgangsöffnung (22) aufweist und die erste Durchgangsöffnung (20) und die zweite Durchgangsöffnung (22) fluchtend zueinander angeordnet sind, wobei das Glassubstrat (16) ein die zweite Durchgangsöffnung (22) zumindest teilweise umschließenden Vorsprung (26) aufweist, wobei der Vorsprung (26) gegenüber der Oberseite des Glassubstrates (16) hervorragt und sich bis in die erste Durchgangsöffnung (20) erstreckt, wobei der Vorsprung (26) von einem in dem Glassubstrat (16) angeordneten Rohr (28) gebildet ist, dessen Ende gegenüber dem Glassubstrat (16) hervorragt, **dadurch gekennzeichnet, dass** das Rohr (28) ebenfalls aus Glas ist.

2. Druckmesszelle nach dem vorstehenden Anspruch,
**dadurch gekennzeichnet, dass**
die zweite Durchgangsöffnung (22) vollständig durch die Innenfläche des Rohres (28) gebildet ist.

3. Druckmesszelle nach einem der beiden vorstehenden Ansprüche,
**dadurch gekennzeichnet,**
**dass** das Rohr (28) in das Glassubstrat (16) eingeglast ist.

4. Druckmesszelle nach einem der vorstehenden Ansprüche,
**dadurch gekennzeichnet, dass**
mehrere elektrische Kontakte (30) direkt in das Glassubstrat (16) eingeglast sind.

5. Druckmesszelle nach einem der vorstehenden Ansprüche 1 bis 2 und 4,
**dadurch gekennzeichnet, dass**
das Rohr (28) lösbar in dem Glassubstrat (16) angeordnet ist.

6. Druckmesszelle nach einem der vorstehenden Ansprüche,
**dadurch gekennzeichnet, dass**
der Durchmesser der ersten Durchgangsöffnung (20) größer ist als der Durchmesser der zweiten Durchgangsöffnung (22).

7. Verfahren zur Herstellung einer Druckmesszelle (10), wobei eine drucksensitive Membran (12) auf einem Träger (14) aus Glas fixiert wird,
**dadurch gekennzeichnet, dass**
die Einheit aus Membran (12) und Träger (14) anschließend auf einem Glassubstrat (16) fixiert wird, wobei der Träger (14) eine erste Durchgangsöffnung (20) aufweist und das Glassubstrat (16) einen Vorsprung (26) mit einer zweiten Durchgangsöffnung (22) aufweist und wobei der Träger (14) und das Glassubstrat (16) derart zueinander positioniert werden, dass der Vorsprung (26) in die erste Durchgangsöffnung (20) hineinragt, wobei zur Bildung des Vorsprungs (26) zunächst ein Rohr (28) aus Glas in das Glassubstrat (16) eingeglast wird und anschließend die Einführung des Vorsprungs (26) in die erste Durchgangsöffnung (20) des Trägers (14) erfolgt.

## Claims

1. A pressure-measuring cell, comprising a carrier (14) made of glass and a pressure-sensitive membrane (12) arranged thereon, wherein the carrier (14) is arranged on a glass substrate (16), wherein the carrier (14) has a first through-opening (20) and the glass substrate (16) has a second through-opening (22), and the first through-opening (20) and the second through-opening (22) are arranged in alignment with one another, wherein the glass substrate (16) has a projection (26), at least partially enclosing the second through-opening (22), wherein the projection (26) protrudes with respect to the upper side of the glass substrate (16) and extends into the first through-opening (20), wherein the projection (26) is formed by a tube (28) which is arranged in the glass substrate (16), the end of which protrudes with respect to the glass substrate (16), **characterised in that** the tube (28) is also made of glass.

2. The pressure-measuring cell according to the preceding claim,
**characterised in that**
the second through-opening (22) is formed entirely by the inner surface of the tube (28).

3. The pressure-measuring cell according to any one of the two preceding claims, **characterised in,**
**that** the tube (28) is glazed into the glass substrate (16).

4. The pressure-measuring cell according to any one of the preceding claims, **characterised in that**
a plurality of electrical contacts (30) are glazed directly into the glass substrate (16).

5. The pressure-measuring cell according to any one of the preceding claims 1 to 2 and 4,
**characterised in that**
the tube (28) is detachably arranged in the glass substrate (16).

6. The pressure-measuring cell according to any one of the preceding claims, **characterised in that**
the diameter of the first through-opening (20) is larger than the diameter of the second through-opening (22).

7. A method for producing a pressure-measuring cell (10), wherein a pressure-sensitive membrane (12) is fixed on a carrier (14) made of glass,
**characterised in that**
the unit, composed of a membrane (12) and a carrier (14), is subsequently fixed on a glass substrate (16), wherein the carrier (14) has a first through-opening (20) and the glass substrate (16) has a projection (26) with a second through-opening (22), and wherein the carrier (14) and the glass substrate (16) are positioned relative to one another in such manner that the projection (26) projects into the first through-opening (20), wherein, to form the projection (26), first a tube (28) made of glass is glazed into the glass substrate (16) and then the projection (26) is inserted into the first through-opening (20) of the carrier (14).

## Revendications

1. Cellule de mesure de pression comprenant un support (14) en verre et une membrane (12) sensible à la pression disposée sur celui-ci, dans laquelle le support (14) est disposé sur un substrat (16) en verre,
dans laquelle le support (14) présente une première ouverture de passage (20) et le substrat (16) en verre présente une deuxième ouverture de passage (22) et, la première ouverture de passage (20) et la deuxième ouverture de passage (22) sont aménagées en alignement l'une par rapport à l'autre,
dans laquelle le substrat (16) en verre présente une saillie (26) entourant au moins partiellement la deuxième ouverture de passage (22), dans laquelle la saillie (26) est en saillie par rapport à la face supérieure du substrat (16) en verre et s'étend jusqu'à la première ouverture de passage (20), dans laquelle la saillie (26) est formée par un tube (28) disposé dans le substrat (16) en verre, dont l'extrémité fait saillie par rapport au substrat (16) en verre,
**caractérisée en ce que** le tube (28) est également en verre.

2. Cellule de mesure de pression selon la revendication précédente,
**caractérisée en ce que**
la deuxième ouverture de passage (22) est formée entièrement par la surface intérieure du tube (28).

3. Cellule de mesure de pression selon l'une quelconque des deux revendications précédentes,
**caractérisée en ce**
**que** le tube (28) est encastré dans le substrat (16) en verre.

4. Cellule de mesure de pression selon l'une quelconque des revendications précédentes,
**caractérisée en ce que**
plusieurs contacts électriques (30) sont directement enrobés dans le substrat (16) en verre.

5. Cellule de mesure de pression selon l'une quelconque des revendications 1 à 2 et 4 précédentes,
**caractérisée en ce que**
le tube (28) est disposé de manière détachable dans le substrat (16) en verre.

6. Cellule de mesure de pression selon l'une quelconque des revendications précédentes,
**caractérisée en ce que**
le diamètre de la première ouverture de passage (20) est supérieur au diamètre de la deuxième ouverture de passage (22).

7. Procédé de fabrication d'une cellule de mesure de pression (10), dans lequel une membrane (12) sensible à la pression est fixée sur un support (14) en verre,
**caractérisé en ce que**
l'unité composée par une membrane (12) et un support (14) est ensuite fixée sur un substrat (16) en verre, dans lequel le support (14) présente une première ouverture de passage (20) et le substrat (16) en verre présente une saillie (26) avec une deuxième ouverture de passage (22), et dans lequel le support (14) et le substrat (16) en verre sont positionnés l'un par rapport à l'autre de telle sorte que la saillie (26) pénètre dans la première ouverture de passage (20), dans lequel un tube (28) en verre est d'abord inséré dans le substrat (16) en verre pour former la saillie (26), puis la saillie (26) est introduite dans la première ouverture de passage (20) du support (14).
